# EUROPÄISCHE PATENTANMELDUNG

(11) **EP 1 273 386 A1**
(43) Veröffentlichungstag der Anmeldung: **08.01.2003**
(21) Anmeldenummer: 02012273.5
(22) Anmeldetag: 05.06.2002
(51) Int. Cl.: B23Q 1/44, B23B 39/14, B23B 41/02, B23C 1/12

(54) **Vorrichtung zum Verstellen einer Spindel**

(30) Priorität: 19.06.2001 DE 10130738
(71) Anmelder: TBT Tiefbohrtechnik GmbH, 72581 Dettingen/Erms (DE)
(72) Erfinder: Randecker, Hermann, 72581 Dettingen (DE); Mack, Gerhard, 89150 Laichingen (DE)
(74) Vertreter: Patentanwälte Ruff, Wilhelm, Beier, Dauster & Partner

(57) **Zusammenfassung**

Ein Bearbeitungszentrum, beispielsweise zum Tiefbohren, enthält eine Anordnung, mit der die Achse der Bearbeitungsspindel in ihrem Abstand von einem Maschinenbett und in ihrer Ausrichtung verstellt werden kann. Die Anordnung enthält zwei spiegelbildlich ausgebildete und angeordnete Lenker (9), deren eines Ende (8) an der Maschine und deren anders Ende (10) an einer Halterung (6) für die Spindel angelenkt ist. Durch gleichzeitiges, getrenntes, synchrones oder sonstiges Bewegen der Lenker (9) lässt sich sowohl die Richtung als auch der Abstand der Spindelachse von dem Maschinenbett verstellen.

## Beschreibung

Die Erfindung geht aus von einer Bearbeitungsmaschine, die eine rotierend angetriebene Spindel enthält, mit der ein rotierendes Werkzeug verbunden werden kann.

Derartige Bearbeitungsmaschinen sind in der Regel so konstruiert, dass die Anordnung der Spindel in drei aufeinander senkrecht stehenden Richtungen verstellt werden kann, die man üblicherweise als X, Y und Z-Achsen bezeichnet.

Bei dem rotierend angetriebenen Werkzeug kann es sich um einen Fräser handeln, aber auch um einen Bohrer. Bohrer müssen in Richtung ihrer eigenen Achse vorgeschoben werden. Diese Achse braucht nicht mit den drei senkrecht aufeinander stehenden Richtungen zusammenzufallen.

Ein spezieller Anwendungsfall ist das Tiefbohren, bei dem mit Hilfe spezieller Bohrer sehr tiefe Löcher gebohrt werden können. Hier werden an die Bearbeitungszentren besonders hohe Anforderungen gestellt, da wegen der großen Länge der Werkzeuge eine besonders große Steifigkeit der Maschine vorhanden sein muss. Bei Tiefbohrmaschinen gibt es auch das Problem, dass der Tiefbohrer gegen ein normales Werkzeug ausgetauscht werden soll.

Der Erfindung liegt die Aufgabe zu Grunde, eine Möglichkeit zu schaffen, wie bei einem Bearbeitungszentrum eine Verstellung der Spindelachse erfolgen kann, wobei besonders hohe Anforderungen an die Steifigkeit der Maschine erfüllt werden sollen.

Zur Lösung dieser Aufgabe schlägt die Erfindung eine Vorrichtung mit den im Anspruch 1 genannten Merkmalen vor. Weiterbildungen der Erfindung sind Gegenstand von Unteransprüchen.

Durch die Anlenkung der Halterung für die Spindel mit Hilfe mindestens zweier Lenker wird erreicht, dass eine Verstellung möglich ist, dass andererseits aber der Abstand zwischen der Achse der Spindel und dem Maschinenbett klein gemacht werden kann. Daher ist es möglich, die beim Bearbeiten, insbesondere beim Tiefbohren, auftretenden Kräfte gut aufzunehmen.

In Weiterbildung der Erfindung kann vorgesehen sein, dass der Antrieb derart ausgebildet ist, dass er die beiden Lenker getrennt d.h. auch unabhängig voneindander verschwenken kann. Es kann eine Steuerung vorgesehen sein, um eine bestimmte Bewegung der Halterung und damit der Spindel durchzuführen. Durch die Steuerung kann damit auch eine gleichzeitige und eine synchrone Bewegung beider Lenker bewirkt werden.

Es ist aber ebenfalls möglich und liegt im Rahmen der Erfindung, dass die gleichzeitige Verschwenkung beider Lenker ohne eine zusätzliche Steuerung erfolgt, beispielsweise durch einen auf beide Lenker in gleicher Weise einwirkenden Antrieb. Es kann sich also um eine mechanische Kopplung beider Lenker handeln, die damit eine gleichzeitige synchrone Verschwenkung beider Lenker gewährleistet. Dabei brauchen beide Lenker nicht in gleicher Richtung oder um den gleichen Betrag verschwenkt zu werden. Auch dies ist mit Hilfe einer mechanischen Synchronisierung möglich.

Erfindungsgemäß kann vorgesehen sein, dass das Maschinenbett einen in zwei senkrecht zueinander verlaufenden Richtungen verfahrbaren Maschinentisch aufweist, demgegenüber die Lenker verschwenkt werden können.

Beispielsweise können die beiden Richtungen, in denen der Maschinentisch verfahren wird, in einer horizontalen Ebene liegen. Dann würde der Antrieb der Lenker dazu dienen, die Halterung für die Spindel in einer dritten Richtung zu verstellen. Diese dritte Richtung liegt vorzugsweise senkrecht zu der Ebene des Maschinentischs. Damit wird ein Bearbeitungszentrum geschaffen, bei dem die Vorstellung der Spindel ebenfalls in drei Richtungen möglich ist.

Es kann vorgesehen sein, dass die Achsen, um die die Lenker verschwenkt werden können, in einer zu beiden Richtungen parallelen Ebene liegen. Dies ist besonders sinnvoll, da damit die Bewegung der Spindel in einem kartesischen Koordinatensystem ermöglicht wird.

Erfindungsgemäß kann die Bewegung der Halterung durch einen Antrieb gesteuert werden. Daher ist es nicht erforderlich, dass die beiden Lenker gleich lang sind oder die gleichen Charakteristika aufweisen. Besonders günstig ist es jedoch, wenn beide Lenker gleich lang sind und wenn vorzugsweise die Achsen ihrer Anlenkstellen paarweise in parallelen Ebenen liegen.

Zum Verschwenken der Lenker kann erfindungsgemäß ein Antrieb vorgesehen sein, der auf Schubstangen einwirkt, deren eines Ende an dem jeweiligen Lenker angelenkt ist. Ein Verschieben der Schubstangen, vorzugsweise in einer geradlinigen Richtung, führt damit zu einer Verschwenkung der Lenker und zu einer Änderung der Position der Halterung.

Insbesondere kann der Antrieb mindestens eine Gewindespindel aufweisen, an der die Schubstangen mit einem Kugelumlaufgetriebe angeordnet sind. Dann lassen sich die Schubstangen mit geringer Reibung und geringen aufzuwendenden Kräften mit hoher Präzision in ihrer Position verändern.

Erfindungsgemäß kann in Weiterbildung vorgesehen sein, dass die Anlenkung eines Lenkers an der Halterung und/oder an dem Maschinenbett um eine parallel zu sich selbst in einer bestimmten Richtung verschiebbare Achse vorgesehen ist. Diese Richtung kann insbesondere parallel zur Drehachse der Spindel bzw. parallel zur Verschiebungsrichtung des angetriebenen Endes der Schubstangen verlaufen.

In Weiterbildung der Erfindung kann vorgesehen sein, dass im Bereich des Spindelkopfs, das heißt der Stelle, an der das Werkzeug mit der Spindel verbunden wird, zwei parallel zueinander verlaufende Lenker vorgesehen sind. Ein dritter Lenker ist dann mit Abstand von dieser Stelle angeordnet. Im Bereich des Spindelkopfs treten während der Bearbeitung eines Werkstücks die höchsten Belastungen der Halterung auf, so dass es für die Stabilität der Vorrichtung vorteilhaft ist, hier eine Verstärkung durch die Anordnung zweier paralleler Lenker vorzunehmen.

Die Lenker zum Verstellen der Halterung gegenüber dem Maschinenbett können beispielsweise identisch ausgebildet sein und in gleicher Richtung verschwenkt werden. Es ist jedoch ebenfalls möglich und wird von der Erfindung bevorzugt, dass die Lenker spiegelbildlich zueinander ausgebildet und angeordnet sind.

Die Anlenkung der Schubstange an dem jeweiligen Lenker kann erfindungsgemäß an einer Stelle erfolgen, die zwischen den Anlenkpunkten des jeweiligen Lenkers liegt, wobei die Stelle der Anlenkung vorzugsweise aus einer Verbindungslinie dieser Anlenkpunkte heraus versetzt ist. Die drei Anlenkpunkte liegen also an den Ecken eines Dreiecks.

Wie bereits erwähnt wurde, enthält die Spindel einen Spindelkopf, wo das Werkzeug mit der anzutreibenden Spindel verbunden wird. Erfindungsgemäß weist der Spindelkopf mindestens eine Aufnahme auf, die zur Aufnahme eines anzutreibenden Werkzeugs ausgebildet und bestimmt ist. Das Werkzeug kann vorzugsweise lösbar mit der Aufnahme verbunden werden.

In Weiterbildung der Erfindung kann vorgesehen sein, dass der Spindelkopf zwei derartige Aufnahmen aufweist, die an zwei verschiedenen Stellen angeordnet sind. Der Spindelkopf kann um eine Achse um 180° verschwenkt werden, wobei in jeder der beiden möglichen Positionen des Spindelkopfs eine Aufnahme in Arbeitsposition für das in ihr enthaltene Werkzeug angeordnet ist. Es ist daher möglich, ein Bearbeitungszentrum so auszubilden, dass es eine bestimmte Bohrung mit zwei verschiedenen Werkzeugen bearbeitet, die beide ohne eine Veränderung der Position des zu bearbeitenden Werkstücks in korrekte Ausrichtung einfach dadurch angeordnet werden, dass der Spindelkopf in der erwähnten Weise verschwenkt wird.

Die Schwenkachse des Spindelkopfs kann dabei vorzugsweise gegenüber der Drehachse der Spindel versetzt sein, was aus Gründen der Antriebsmöglichkeiten insbesondere bei Tiefbohrwerkzeugen sehr sinnvoll ist.

Erfindungsgemäß kann vorgesehen sein, dass die Achse der Anlenkung mindestens eines Verstelllenkers in der Nähe der Schwenkachse des Spindelkopfs verläuft. Dies ist aus den bereits erwähnten Stabilitätsgründen vorzuziehen. Vorzugsweise fallen die Achsen zusammen.

Eine Möglichkeit, wie eine synchrone Verstellung beider Lenker erfolgen kann, besteht darin, dass die Schubstangen mit Kugelumlaufgetrieben mit einer gemeinsamen Gewindespindel verbunden sind. Wenn die Gewindespindel ein durchgehendes Gewinde aufweist, werden daher die beiden Lenker in der gleichen Richtung verschwenkt. Sollen sie gegenläufig verschwenkt werden, ist es möglich, eine Gewindespindel zu verwenden, die zwei Abschnitte mit Gewinden unterschiedlichen Gewindesinns aufweist.

Erfindungsgemäß kann die Vorrichtung eine Steuerung aufweisen, um den Antrieb des Maschinentischs in den beiden Richtungen und den Antrieb für die Halterung in der dritten Richtung so zu steuern, dass eine lineare Vorschubbewegung des Spindelkopfs und damit des Bohrwerkzeugs in einer beliebigen Richtung möglich ist, die nicht mit der Verstellrichtung der einzelnen Antriebe zusammen fallen muss.

Weitere Merkmale, Einzelheiten und Vorzüge der Erfindung ergeben sich aus der folgenden Beschreibung einer bevorzugten Ausführungsform, den Patentansprüchen und der Zusammenfassung, deren Wortlaut durch Bezugnahme zum Inhalt der Beschreibung gemacht wird, sowie anhand der Zeichnung. Hierbei zeigen:
- Figur 1: schematisch die Seitenansicht eines Bearbeitungszentrums mit einer von der Erfindung vorgeschlagenen Verstellvorrichtung;
- Figur 2: eine der Figur 1 entsprechende vereinfachte Darstellung, bei der die Halterung für die Spindel in einer zweiten Position angeordnet ist;
- Figur 3: eine weitere Darstellung mit einer dritten möglichen Position der Spindel;
- Figur 4: eine Darstellung mit einer weiteren Position der Spindel;
- Figur 5: eine Ansicht der Vorrichtung von links in Figur 2;
- Figur 6: eine Aufsicht auf die Anordnung;
- Figur 7: in vergrößertem Maßstab eine stark vereinfachte Darstellung des Spindelkopfs der Vorrichtung;
- Figur 8: eine der Figur 7 entsprechende Darstellung mit einem um 180° verschwenkten Spindelkopf.

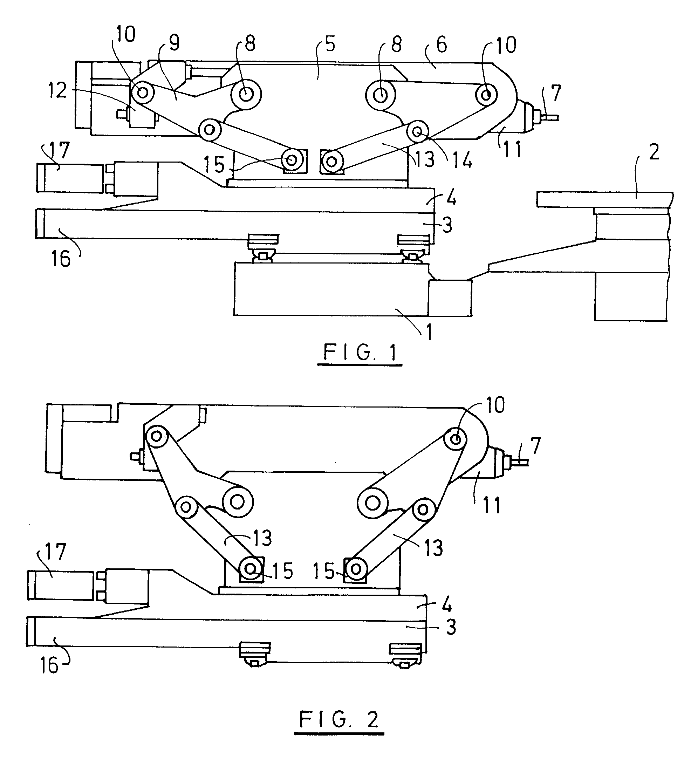

In Figur 1 ist eine Basis 1 dargestellt, die beispielsweise ortsfest angeordnet ist. Neben der Basis 1 eines Bearbeitungszentrums ist ein Tisch 2 angeordnet, auf dem ein zu bearbeitendes Werkstück angeordnet werden soll. Gegenüber der Basis 1 ist ein Maschinentisch 3 in einer Richtung senkrecht zur Zeichnungsebene durch einen Antrieb verschiebbar, auf dem ein zweiter Tisch 4 in einer Richtung von links nach rechts ebenfalls durch einen eigenen Antrieb verschoben werden kann.

Die beiden Richtungen, in denen eine Verschiebung erfolgen kann, definieren Ebenen. Diese Ebenen können als X- und Z-Richtung definiert werden. Auf dem Maschinentisch 4 sind insgesamt vier senkrecht verlaufende Wangen 5 befestigt, denen gegenüber eine Halterung 6 für eine ein Bearbeitungswerkzeug 7 antreibende Spindel verstellt werden kann. Bei der Halterung 6 für die Spindel des Bearbeitungszentrums handelt es sich um ein langgestrecktes Bauteil, an dessen in den Figuren 1 bis 4 nicht zu sehender Rückseite die Spindel angebracht ist. Für die Diskussion der Bewegung der Halterung ist es aber nicht erforderlich, auf Einzelheiten der Spindel einzugehen.

An den Wangen 5, für die als Beispiel jetzt nur die in den Figuren 1 bis 4 zu sehende vordere Wange 5 benutzt wird, sind an zwei Punkten 8 jeweils ein Lenker 9 angelenkt. Die Anlenkpunkte 8 bilden Achsen, die parallel zueinander und parallel zu der Ebene des Maschinentischs 4 verlaufen.

Die Achsen 8 verlaufen sowohl parallel zu der Ebene der Verstellrichtung des Maschinentischs 3 als auch parallel zu der Ebene der Verstellrichtung des Maschinentischs 4. Die beiden Lenker 9 weisen an ihren jeweils anderen Enden ebenfalls Lagerungen 10 auf, die gegenüber den Anlenkpunkten 8 jeweils nach außen verlagert sind. Der in der Figur 1 rechte, dem Spindelkopf 11 zugeordnete Lenker 9 ist mit seiner Lagerung 10 an der Halterung 6 für die Spindel direkt angelenkt.

Der in Figur 1 linke Lenker 9 ist mit seiner Lagerung 10 an einem Schlitten 12 angelenkt, der an der Halterung 6 für die Spindel längsverschieblich geführt ist. Die Verschiebungsrichtung des Schlittens 12 entspricht in der Seitenansicht der Drehachse der Spindel und damit des Werkzeugs 7.

An beiden Lenkern 9 sind Schubstangen 13 angelenkt. Die Anlenkpunkte 14 für die Schubstangen 13 liegen etwa zwischen den beiden Anlenkpunkten 8, 10 jedes Lenkers 9. Sie sind gegenüber einer diese Anlenkpunkte 8, 10 verbindenden Linie seitlich versetzt, so dass die drei Anlenkpunkte 8, 10, 14 jedes Lenkers 9 auf einem Dreieck liegen. Die jeweiligen anderen Enden der Schubstangen 13 weisen Schuhe 15 auf, die längs einer geraden Linie auf dem Maschinentisch 4 verschiebbar geführt sind.

Die Verschiebung kann beispielsweise durch eine Gewindespindel erfolgen, mit der die Schuhe 15 in Gewindeeingriff stehen. Es kann für jeden Schuh 15 eine eigene Gewindespindel vorgesehen sein, die dann in der Zeichnung der Figur 1 hintereinander angeordnet sind. Dieser Antrieb ist aus Gründen der Vereinfachung in den Figuren 1 bis 4 nicht dargestellt.

Durch die Gewindespindel bzw. einen sonstigen Antrieb lassen sich die beiden Schuhe 15 längs der erwähnten Richtung nach rechts oder links verschieben, wobei die Schuhe 15 gleichzeitig, getrennt, gegenläufig oder in sonstiger Weise verschoben werden können. Hierzu kann ein mechanischer Antrieb verwendet werden, der gegebenenfalls elektronisch gesteuert wird.

Zunächst wird nun eine einfache Bewegung der Halterung 6 beschrieben, deren Ergebnis in Figur 2 dargestellt ist. Die Schuhe 15 beider Lenker werden durch den erwähnten Antrieb gegenläufig bewegt. Der dem Spindelkopf 11 zugeordnete Lenker 9 wird durch seine Schubstange 13 im Gegenuhrzeigersinn verschwenkt, während der gegenüberliegenden Lenker 9, in Figur 1 und 2 links, durch seine Schubstange 13 in Uhrzeigersinn verschwenkt wird.

Da die Anlenkstellen 8 in der Wange 5 feste Wellen bilden, ändert sich der Abstand der Anlenkstellen 10 der Lenker 9 an der Halterung 6. Die eine Lagerung 10 ist mit der Halterung 6 an einer festen Stelle verbunden, während die zweite Lagerung 10 mit den Schieber 12 verbunden ist. Dadurch kann ein Ausgleich dieses Unterschieds der Abstände erfolgen.

Da beide Lenker 9 die gleiche Abmessungen ihrer Anlenkpunkte aufweisen, wenngleich spiegelbildlich, und da beide Schubstangen 13 gleich ausgebildet sind, führt die erwähnte Bewegung der Schubstangen 13 und die Verschwenkung der Lenker 9 zu einer Verlagerung der Halterung 6, bei der die Achse der Spindel parallel zu sich bleibt. Das Ergebnis ist, wie bereits erwähnt, in Figur 2 dargestellt. Das Werkzeug 7 ist jetzt an einer höheren Stelle angeordnet, wobei die Orientierung seiner Drehachse gleich geblieben ist.

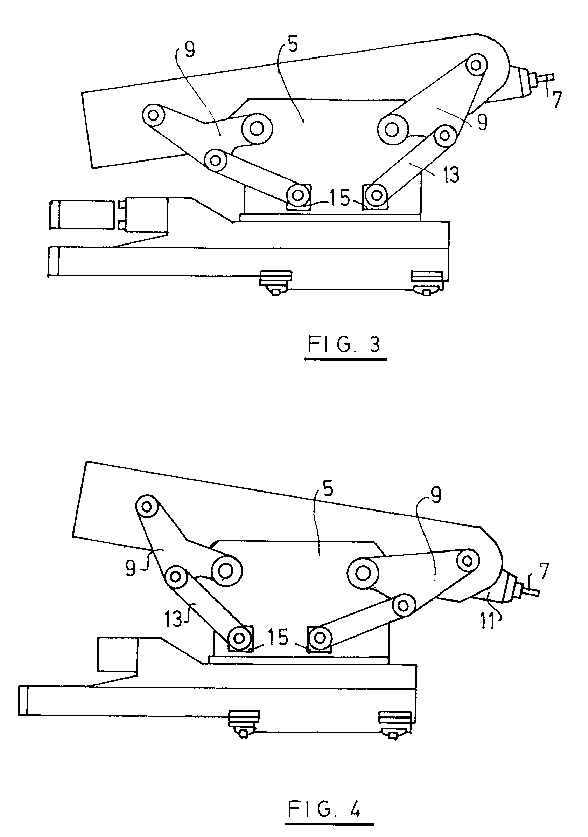

Es ist mit der Vorrichtung nach der Erfindung aber nicht nur möglich, die Halterung 6 parallel zu sich zu verschieben, sondern auch eine Änderung der Orientierung der Drehachse des Werkzeugs 7 zu bewirken. Zu diesem Zweck wird auf die Figur 3 verwiesen. Der Unterschied zwischen der Figur 1 und der Figur 3 besteht darin, dass ausgehend von der Position der Figur 1 nur die dem Spindelkopf 11 zugeordnete Schubstange 13 linear bewegt wird, so dass dieser Lenker 9 im Gegenuhrzeigersinn verschwenkt wird. Der andere Lenker 9 bleibt in seiner Ausgangsposition. Dadurch wird die Orientierung der Drehachse der Spindel und des Werkzeugs 7 verändert.

Figur 4 zeigt eine umgekehrte Position, die dadurch erreicht wird, dass ausgehend von der Position der Figur 1 nur die linke Schubstange 13 nach links verschoben wird. Dadurch wird der dem hinteren Ende der Halterung 6 zugeordnete Lenker 9 im Uhrzeigersinn verschwenkt, so dass die Achse des Werkzeugs 7 nach unten zeigt.

Selbstverständlich sind auch Kombinationen beider Bewegungen möglich, das heißt eine Verschiebung der Halterung 6 nach oben mit gleichzeitiger Änderung der Position der Drehachse der Spindel.

Für die Verschiebung beider Maschinentische 3 und 4 gibt es jeweils einen eigenen Antrieb, von denen in Figur 1 schematisch der Antrieb 16 für den Tisch 4 dargestellt ist. Der Antrieb für den Tisch 3 liegt hinter dem Antrieb 16. Der Antrieb 17 ist für die Verstellung der Lenker 9 bestimmt. Soll nun eine Bohrung beispielsweise mit einer Orientierung des Werkzeugs 7 wie in Figur 3 dargestellt durchgeführt werden, so kann dies nicht durch Betätigen eines einzigen Antriebs geschehen. Zu diesem Zweck kann die Vorrichtung eine Steuerung haben, die sowohl eine Verschiebung des Maschinentischs 4 als auch ein dann erforderliches Verschwenken der Lenker 9 synchronisiert veranlasst. Durch die Steuerung lassen sich also auch die unterschiedlichsten Bewegungsabläufe verwirklichen.

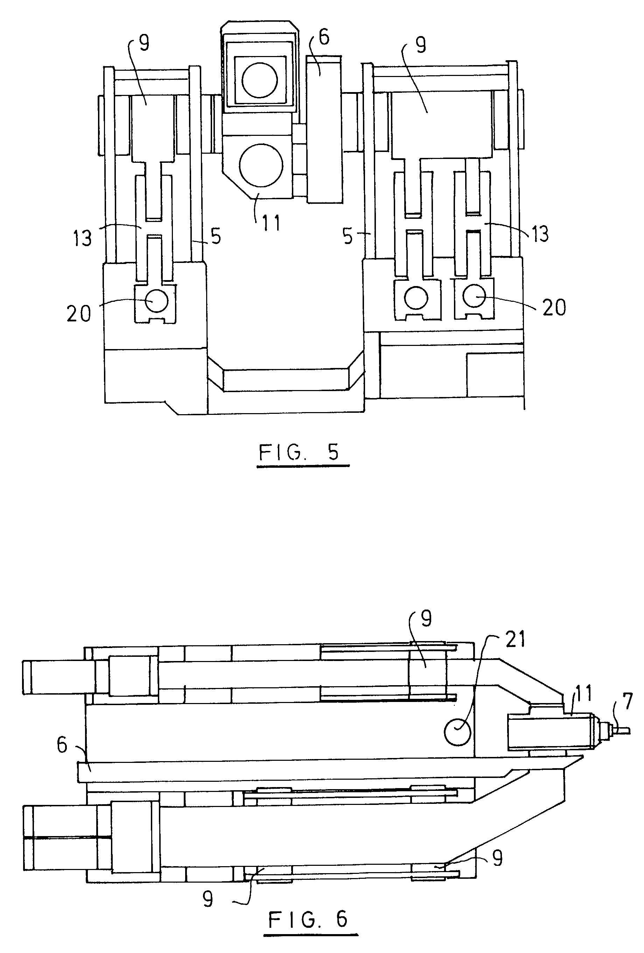

Figur 5 zeigt die Anordnung der Figur 1 von links in Figur 1. Hier ist ein etwas genauer der Aufbau der Wangen 5 zu sehen. Beidseits der Spindel und der Halterung 6 sind jeweils zwei Wangen 5 angeordnet, zwischen denen die Lenker 9 angeordnet sind. Aus Figur 5 ist auch zu sehen, dass für den vorderen Bereich der Spindel zwei Lenker vorhanden sind, nämlich der links in der Figur 5 zu sehende Lenker 9 und der nur teilweise zu sehende Lenker 9 rechts.

Für den Antrieb der Schubstangen 13 sind insgesamt drei Gewindespindeln vorgesehen, die alle parallel zueinander und in gleicher Richtung verlaufen.

Figur 6 zeigt eine Aufsicht, aus der ebenfalls zu sehen ist, dass im Bereich des Spindelkopfs 11 auf beiden Seiten je ein Lenker 9 vorhanden ist, während im Bereich des Endes, also links in Figur 6, nur ein einziger Lenker 9 vorhanden ist. Figur 6 zeigt zusätzlich eine Welle 21, die senkrecht verläuft und es ermöglicht, die gesamte Anordnung um die Achse dieser Welle zu verschwenken. Es ist also eine weitere Möglichkeit vorhanden, wie die Achse des Spindelkopfs 11 und damit des Werkzeugs verschenkt werden kann.

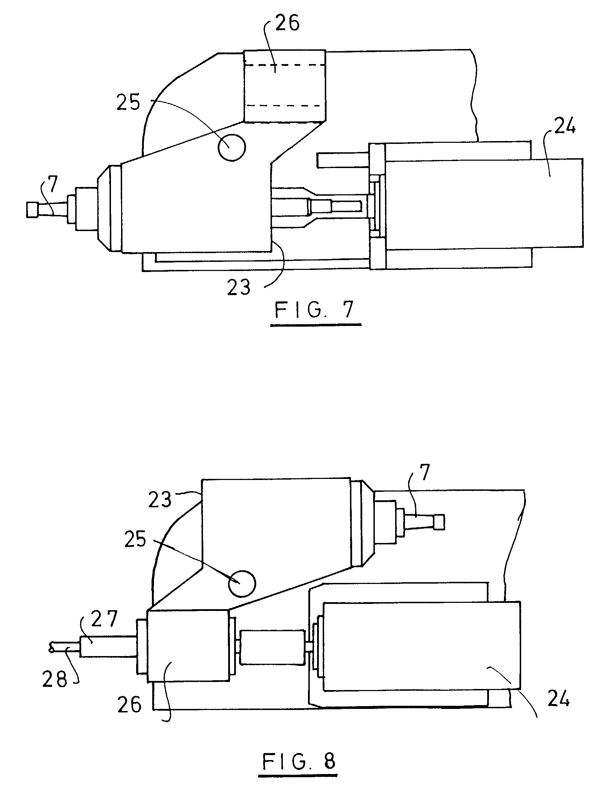

Die Figuren 7 und 8 zeigen den Spindelkopf 11 in größerer Einzelheit, wobei die Darstellung stark schematisiert ist. In Figur 7 ist ein kurzer Bohrer 7 in dem Spindelkopf 11 angeordnet. Auf der in Figur 7 rechten Rückseite 23 des Spindelkopfs ist ein Antrieb 24 eingekoppelt, der das Werkzeug 7 rotierend antreibt. Der Spindelkopf seinerseits ist um eine senkrecht zur Zeichnungsebene verlaufende Welle 25 verschwenkbar gelagert, wobei er in zwei um 180° versetzten Positionen arretierbar ist. Parallel zu der das Werkzeug 7 aufnehmenden Aufnahme ist eine zweite Aufnahme 26 angeordnet, die von der Achse der Welle 25 den gleichen Abstand aufweist wie die Aufnahme für das Werkzeugs 7. Es ist möglich, den Antrieb 24 von dem Antrieb für des Werkzeug 7 auszukuppeln und zurückzuziehen. Dann kann der Spindelkopf um 180° verschwenkt werden, so dass dann die Aufnahme 26 in der exakt ausgerichteten Position angeordnet ist, die vorher das Werkzeug 7 mit seiner Aufnahme eingenommen hatte. Diese Position ist in Figur 8 dargestellt. Dann kann die Aufnahme 26 zur Aufnahme einer Anbohrführung 27 für einen Tiefbohrer 28 dienen, der von dem gleichen Antrieb 24 oder auch einem getrennten Antrieb antreibbar ist. Es ist daher möglich, mit der gleichen Anordnung sowohl eine Tiefbohrung anzubringen als auch die gleiche Stelle mit einem anderen Werkzeug zu bearbeiten, wobei die Reihenfolge der Bearbeitung freigestellt ist.

## Patentansprüche

1. Vorrichtung zum Verstellen einer rotierend antreibbaren Spindel eines Bearbeitungszentrums in mindestens einem Freiheitsgrad, mit
1.1 einem Maschinenbett,
1.2 einer Halterung (6) für die Spindel des Bearbeitungszentrums,
1.3 mindestens zwei Lenkern (9), die
1.3.1 an dem Maschinenbett um zwei parallele Achsen und
1.3.2 an der Halterung (6) für die Spindel um zwei parallele Achsen verschwenkbar angelenkt sind, sowie mit
1.4 einem Antrieb zum Verschwenken beider Lenker (9).

2. Vorrichtung nach Anspruch 1, bei der der Antrieb derart ausgebildet ist, dass er die beiden Lenker (9) getrennt und/oder synchron gleichzeitig verschwenken kann, gegebenenfalls gegenläufig.

3. Vorrichtung nach Anspruch 1 oder 2, bei der das Maschinenbett einen in zwei senkrecht zueinander verlaufenden Richtungen verfahrbaren Maschinentisch (4) aufweist, demgegenüber die Lenker (9) verschwenkt werden können.

4. Vorrichtung nach Anspruch 3, bei der die Achsen der Verschwenkung in einer zu beiden Richtungen parallelen Ebene liegen.

5. Vorrichtung nach einem der vorhergehenden Ansprüche, bei der beide Lenker (9) gleich lang sind.

6. Vorrichtung nach einem der vorhergehenden Ansprüche, bei der zum Verschwenken der Lenker (9) jeweils eine Schubstange (13) vorgesehen ist, deren eines Ende an dem Lenker (9) angelenkt ist.

7. Vorrichtung nach Anspruch 6, bei der das jeweils andere Ende der Schubstangen (13) linear verschiebbar angeordnet ist.

8. Vorrichtung nach Anspruch 6 oder 7, bei der der Antrieb mindestens eine Spindel mit einem Kugelumlaufgetriebe für die Schubstangen (13) aufweist.

9. Vorrichtung nach einem der vorhergehenden Ansprüche, bei der die Anlenkung eines Lenkers (9) an der Halterung (6) für die Spindel um eine parallel zu sich selbst in einer Richtung verschiebbare Achse erfolgt.

10. Vorrichtung nach Anspruch 9, bei der die Verschieberichtung der Achse parallel zur Drehachse der Spindel verläuft.

11. Vorrichtung nach einem der vorhergehenden Ansprüche, bei der im Bereich des Spindelkopfs (11) zwei parallel zueinander verlaufende Lenker (9) vorgesehen sind.

12. Vorrichtung nach einem der vorhergehenden Ansprüche, bei der die Lenker (9) spiegelbildlich zueinander ausgebildet und angeordnet sind.

13. Vorrichtung nach einem der Ansprüche 6 bis 12, bei der die Anlenkung der Schubstange (13) an dem Lenker (9) an einer Stelle zwischen den Anlenkpunkten der Lenker (9) erfolgt, vorzugsweise aus einer Verbindungslinie der Anlenkpunkte heraus versetzt.

14. Vorrichtung nach einem der vorhergehenden Ansprüche, bei der die Spindel einen Spindelkopf (11) mit einer Aufnahme aufweist, an der ein Werkzeug (7, 28) auswechselbar angebracht werden kann.

15. Vorrichtung nach Anspruch 14, bei der der Spindelkopf (11) um eine Achse senkrecht zur Drehachse der Spindel verschwenkbar ist, vorzugsweise um 180°.

16. Vorrichtung nach Anspruch 15, bei der die Schwenkachse gegenüber der Drehachse der Spindel versetzt ist.

17. Vorrichtung nach einem der Ansprüche 14 bis 16, bei der der Spindelkopf (11) eine zweite Aufnahme (26) für eine Werkzeugführung (27) aufweist, die alternativ zu der ersten Aufnahme in Bearbeitungsposition gebracht werden kann.

18. Vorrichtung nach einem der vorhergehenden Ansprüche, bei der die Achse der Anlenkung mindestens eines Verstelllenkers (9) in der Nähe der Schwenkachse des Spindelkopfs (11) verläuft, vorzugsweise mit dieser zusammenfällt.

19. Vorrichtung nach einem der vorhergehenden Ansprüche, bei der zur synchronen Verstellung der Lenker (9) eine Schraubspindel mit zwei Abschnitten umgekehrter Gewinderichtung vorgesehen ist.

20. Vorrichtung nach einem der vorhergehenden Ansprüche, mit einer Steuerung zum koordinierten Betrieb der Antriebe zur Ermöglichung eines linearen Vorschubs in einer Richtung, die nicht mit der Verstellrichtung der einzelnen Antriebe zusammen fällt.

21. Vorrichtung nach einem der vorhergehenden Ansprüche, mit einer Einrichtung zum Verdrehen um eine vertikale Achse (21), vorzugsweise zwischen den beiden in einer Ebene verstellbaren Maschinentischen (3, 4).
